(19) Europäisches Patentamt
European Patent Office
Office européen des brevets

(11)  **EP 2 896 727 B1**

(12)  **EUROPEAN PATENT SPECIFICATION**

(45) Date of publication and mention
of the grant of the patent:
**08.11.2017  Bulletin 2017/45**

(21) Application number: **13836398.1**

(22) Date of filing: **27.08.2013**

(51) Int Cl.:
*D01F 9/08* *(2006.01)*       *D04H 1/4209* *(2012.01)*
*F01N 3/28* *(2006.01)*       *B01D 53/94* *(2006.01)*
*C03C 3/062* *(2006.01)*      *C03C 13/00* *(2006.01)*
*C03C 13/06* *(2006.01)*      *C04B 35/44* *(2006.01)*
*C04B 35/622* *(2006.01)*     *F16L 59/02* *(2006.01)*

(86) International application number:
**PCT/JP2013/005041**

(87) International publication number:
**WO 2014/041753 (20.03.2014 Gazette 2014/12)**

(54) **INORGANIC FIBERS AND MOLDED BODY USING SAME**

ANORGANISCHE FASERN UND DIESE VERWENDENDER FORMKÖRPER

FIBRES INORGANIQUES ET CORPS MOULÉ LES UTILISANT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.09.2012  JP 2012203414**

(43) Date of publication of application:
**22.07.2015  Bulletin 2015/30**

(73) Proprietor: **Nichias Corporation
Tokyo 104-8555 (JP)**

(72) Inventors:
• **TOMOSUE, Nobuya**
  **Tokyo 104-8555 (JP)**
• **ISOMURA, Kazutoshi**
  **Tokyo 104-8555 (JP)**
• **MURAYAMA, Kazutaka**
  **Tokyo 104-8555 (JP)**
• **SATO, Kiyoshi**
  **Tokyo 104-8555 (JP)**

(74) Representative: **Schmitz, Joseph
Isler & Pedrazzini AG
Giesshübelstrasse 45
Postfach 1772
8027 Zürich (CH)**

(56) References cited:
EP-A1- 2 679 710       EP-A1- 2 811 055
ES-T3- 2 349 477       FR-A1- 2 118 026
JP-A- 2009 041 499     JP-A- 2009 515 800
JP-A- 2011 196 008     US-A1- 2007 020 454
US-A1- 2009 060 802

**Description**

Technical Field

The invention relates to inorganic fibers, and a formed product such as a heat-insulating material, a cushion material, a holding material or the like obtained by using the same.

Background Art

Due to the excellent heat resistance thereof, inorganic fibers are used as materials constituting a heat-insulating material, a refractory material or the like in various fields such as the field of automobiles, the field of construction, and industrial furnaces. Inorganic fibers are also used as a cushion material or a holding material in which such a heat-insulating material is interposed between constituting members.

For example, a catalytic converter for exhaust gas purification that is mounted on vehicles or the like is generally formed of a catalyst carrier, a holding material and a casing, and the catalyst carrier is installed inside the casing with the holding material being disposed therebetween. As for the holding material, one obtained by forming inorganic fibers such as alumina fibers, mullite fibers, or other ceramic fibers into a mat-like shape having a prescribed thickness by using an organic binder or one obtained by subjecting collected inorganic fibers to a needle processing to form the fibers into a mat-like shape constitutes the mainstream (Patent Document 1, for example).

In recent years, in order to enhance the purification efficiency, a catalyst carrier is heated at a temperature of higher than 900°C. Therefore, a holding material is required to hold a catalyst carrier even when used at such a high temperature.

Further, alumina fibers or the like used in a holding material is thought to pose no adverse effects on health as long as they are treated adequately. However, a possibility that a disorder is caused on lungs when inhaled by a human body cannot be denied, and a further degree of safety has been required.

Related Art Documents

Patent Document

Patent Document 1: JP-A-2009-41499

WO 2007/054697 is concerned with thermal insulation comprising inorganic fibres exhibiting bio-solubility comprising $Al_2O_3$, CaO and $SiO_2$ where $AL_2O_3$ can be present at 44.8 mol%, CaO can be present at 25.7 mol% and $SiO_2$ can be present at 29.5 mol%.

US2009/0060802 A1 is concerned with the use of heat resistant bio-soluble fibres comprising alumina, silica and calcium oxide as a holding material or mounting mat for a catalytic converter in the gap between the fragile ceramic material and the housing.

Summary of the Invention

An object of the invention is to provide inorganic fibers capable of forming a formed body having excellent compression and recovery property when used on heating, holding properties, heat resistance and bio-solubility, as well as to provide a formed body.

According to the invention, the following inorganic fibers or the like are provided.

1. Inorganic fibers having the following composition:

| | |
|---|---|
| $Al_2O_3$ | 43.2 to 51.2 mol% |
| $SiO_2$ | 12.8 to 20.8 mol% |
| CaO | 32.0 to 40.0 mol% |

the total of the components mentioned above is 98 mol% or more.

2. The inorganic fibers according to 1 having the following composition:

| | |
|---|---|
| $Al_2O_3$ | 44.2 to 50.2 mol% |
| $SiO_2$ | 13.8 to 19.8 mol% |
| CaO | 33.0 to 39.0 mol% |

3. The inorganic fibers according to 1 or 2 that have a Yoshiokaite structure.

4. A formed body comprising the inorganic fibers according to any one of 1 to 3.

5. The formed body according to 4 that is a cushion material or a holding material.

6. The formed body according to 5 that is a holding material interposed in a gap between a catalyst carrier and a casing that accommodates the catalyst carrier.

7. The formed body according to any one of 4 to 6 that has a release surface pressure (i) of 1.2 $N/cm^2$ or more after 1000 cycles of test at a packing density of 0.3 $g/cm^3$ and a releasing ratio of 12.5%, or a release surface pressure (ii) of 2.0 $N/cm^2$ or more after 1000 cycles of test at a packing density of 0.3 $g/cm^3$ and a releasing ratio of 8%.

8. The formed body according to 7 that has both the release surface pressure (i) and the release surface pressure (ii).

According to the invention, it is possible to provide inorganic fibers capable of forming a formed body having excellent compression and recovery property when used on heating, holding properties, heat resistance and bio-solubility, and is possible to provide a formed body.

Brief Description of the Invention

FIG. 1 is a schematic cross-sectional view showing one example of a catalytic converter for exhaust gas purification;
FIG. 2 is a perspective view of a catalytic carrier and a holding material in a catalytic converter for exhaust gas purification; and
FIG. 3 is a view showing one example of the shape of the holding material of the invention.

Mode for Carrying out the Invention

The inorganic fibers of the invention have the following composition.

| | |
|---|---|
| $Al_2O_3$ | 43.2 to 51.2 mol% |
| $SiO_2$ | 12.8 to 20.8 mol% |
| CaO | 32.0 to 40.0 mol% |

The total of the above components is 98 to 100 mol%.

Further, in respect of bio-solubility, the following composition is more preferable.

| | |
|---|---|
| $Al_2O_3$ | 44.2 to 50.2 mol% |
| $SiO_2$ | 13.8 to 19.8 mol% |
| CaO | 33.0 to 39.0 mol% |

The total of the above components is 98 to 100 mol%.

The above-mentioned inorganic fibers may contain $Al_2O_3$ in an amount of less than 50 mass%.

In the above-mentioned inorganic fibers, the total of $Al_2O_3$, $SiO_2$ and CaO may be 99 to 100 mol% or 100 mol% (including impurities inevitably mixed in).

The inorganic fibers of the invention may or may not necessarily contain an oxide of a metal selected from Sc, La, Ce, Pr, Nd, Sm, Eu, Gd, Tb, Dy, Ho, Er, Tm, Yb, Lu and Y or a mixture thereof. The amount of each of these oxides may be 0 mass% or more and 3 mass% or less, 0 mass% or more and 2 mass% or less, 0 mass% or more and 1.0 mass% or less, 0 mass% or more and 0.5 mass% or less, 0 mass% or more and 0.2 mass% or less, or 0 mass% or more and 0.1 mass% or less.

Each of alkali metal oxides ($K_2O$, $Na_2O$, $Li_2O$, or the like) may be or may not be necessarily contained. The amount of each or the total of the alkali metal oxides may be 0 mass% or more and 3 mass% or less, 0 mass% or more and 2 mass% or less, 0 mass% or more and 1.0 mass% or less, 0 mass% or more and 0.5 mass% or less, 0 mass% or more and 0.2 mass% or less or 0 mass% or more and 0.1 mass% or less.

Each of $TiO_2$, ZnO, $B_2O_3$, $P_2O_5$, MgO, SrO, BaO, $Cr_2O_3$, $ZrO_2$ and $Fe_2O_3$ may be or may not necessarily be contained, and the amount thereof may be 0 mass% or more and 3 mass% or less, 0 mass% or more and 2 mass% or less, 0 mass% or more and 1.0 mass% or less, 0 mass% or more and 0.5 mass% or less, 0 mass% or more and 0.2 mass% or less or 0 mass% or more and 0.1 mass% or less.

It is preferred that the inorganic fibers have a Yoshiokaite crystal structure. The Yoshiokaite structure is $Ca_{5.3}Al_{10.6}Si_{5.35}O_{32}$, and, due to the presence of this structure, the fiber strength tends to be increased.

Presence of the Yoshiokaite structure can be observed by an X-ray diffraction measurement.

It is preferred that the inorganic fibers of the invention have a release surface pressure (this surface pressure corresponds to a surface pressure in the state where the fibers have a low packing density and less compressed than before after being compressed once at a high packing density. The catalyst carrier is supported at this surface pressure) after a one-cycle test at a packing density of 0.3 g/cm$^3$ and a release ratio of 12.5% of 2.0 N/cm$^2$ or more, and more preferably 2.2 N/cm$^2$ or more. Due to a release surface pressure of 2.0 N/cm$^2$ or more, the catalyst carrier can be held more surely.

It is preferred that the inorganic fibers have a compression surface pressure (this surface pressure corresponds to a surface pressure at the time of cooling) at a packing density of 0.3 g/cm$^3$ of 13.0 N/cm$^2$ or more. A higher compression surface pressure is preferable, since the release surface pressure tends to increase if the compression surface pressure is high.

The release surface pressure and the compression surface pressure are measured by a method described in the Examples.

When a holding material is formed of the inorganic fibers and the holding material is used in a catalytic converter, for example, the catalytic converter is heated at a temperature exceeding 900°C when used, and cooled when not used. Therefore, heating and cooling are repeated in the catalytic converter. In particular, a casing is normally formed of a metal, and hence, expansion and shrinkage are repeated with a great degree. When a holding material is inserted, even if it is compressed between a catalyst carrier and a casing, since the casing is expanded with an increase in temperature when used, the holding material is required to hold the catalyst carrier in the state where the compression is relaxed. Accordingly, it is required that the holding material have a strength sufficient to hold the catalytic carrier at the time of compression and, in particular, when compression is released. The release surface pressure and the compression surface pressure serve as an index of holding properties in such states.

As mentioned above, in actual use, the compression density of the holding material is lowered due to thermal expansion of the case. On the contrary, when not use, the packing density is increased due to shrinkage of the case. The dimension of a gap in which the holding material is inserted that is widened by thermal expansion relative to the dimension of a gap in which the holding material is inserted in the cold state is called "release amount", and the ratio is called "release ratio". In general, a gasoline vehicle is used at a release ratio of about 12.5%. However, according to design or type, a gasoline vehicle is assumed to be used at a release ratio smaller than 12.5%, e.g. 8%.

The inorganic fibers have a surface pressure residual ratio of preferably 13% or more, more preferably 14% or more.

The surface pressure residual ratio can be measured by a method described in the Examples.

The surface pressure residual ratio serves as an index for brittleness of fibers. If fibers have a small surface pressure residual ratio, the fibers are brittle, and the surface pressure thereof may be lowered during use.

The inorganic fibers have a heat resistance at an applied load of 4 N/cm$^2$ or 10 N/cm$^2$ of preferably 850°C or more, more preferably 880°C or more. If the fibers have a heat resistance of 850°C or more, there is a possibility that they can be applied to a gasoline vehicle.

Heat resistance can be measured by the method described in the Examples.

It is preferred that the inorganic fibers have a dissolution rate constant of preferably 50 ng/cm$^2 \cdot$ h or more, more preferably 80 ng/cm$^2 \cdot$ h or more, and further preferably 100 ng/cm$^2 \cdot$ h or more for physiological saline having a pH of 4.5 and a pH of 7.4 as an index of bio-solubility. A larger dissolution rate constant is preferable.

The dissolution rate constant can be measured by the method described in the Examples.

Since the inorganic fibers are used as a cushion material, it is preferred that the inorganic fibers have a compression and recovery property.

An explanation will be made on the method for producing the inorganic fibers of the invention. The inorganic fibers can be produced by a fusion method, a sol-gel method and other known methods. Since the viscosity of a molten material of an inorganic fiber raw material that contains a large amount of $Al_2O_3$ tends to vary with a change in temperature, and hence it is significantly difficult to form it into fibers. Therefore, a sol-gel method is preferable. Hereinbelow, a production method by a sol-gel method will be explained.

Normally, the inorganic fibers are produced by a method in which a spinning raw material liquid containing an aluminum source, a calcium source, a silicon source and a spinning aid is prepared, the spinning raw material liquid is spun by a sol-gel method to obtain crude inorganic fibers, and the obtained crude inorganic fibers are fired.

As the aluminum source, a water-soluble aluminum compound is preferable. No specific restrictions are imposed on the water-soluble aluminum compound, and basic aluminum chloride, aluminum nitrate, basic aluminum carboxylate or the like can be given. Among these water-soluble aluminum compounds, basic aluminum chloride that is industrially versatile and is easily available is preferable.

As the calcium source, a water-soluble calcium compound is preferable. No specific restrictions are imposed on the water-soluble calcium compound, and a carbonate, a nitrate, a sulfate, an acetate, a hydroxide, a chloride, a fluoride, a borate and a phosphate of calcium or the like can be given. Among these water-soluble calcium compounds, calcium nitrate and calcium chloride are preferable in respect of stability of a spinning raw material aqueous solution.

As the silicon source, a water-soluble or water-dispersible silicon compound can be given.

No specific restrictions are imposed on the water-soluble or water-dispersible silicon compound. For example, as the water-soluble silicon compound, a water-soluble silicate, a water-soluble silicon alkoxide (tetramethoxysilane, tetraethoxysilane, tetrapropoxysilane or the like), siloxane or the like can be given. As the water-dispersible silicon compound, silica sol (colloidal silica) or the like can be given. Among these silicon compounds, silica sol (colloidal silica) is preferable in respect of viscosity stability of a spinning raw material aqueous solution. As the colloidal silica, cationic colloidal silica or anionic colloidal silica can be given.

No specific restrictions are imposed on the spinning aid. Taking easiness in handling or solubility into consideration, the spinning aid is preferably a water-soluble organic polymer. As the water-soluble organic polymer, one or more selected from polyethylene oxide, polypropylene oxide, polyvinyl alcohol, partially saponified polyvinyl alcohol, polyvinyl ether, polyvinyl ester, polyacrylic ester, starch and a copolymer of these can be given, for example. Among these spinning aids, polyethylene oxide or partially saponified polyvinyl alcohol is preferable.

It is preferred that the above-mentioned spinning aid be contained in an amount of 2 to 20 parts by mass relative to 100 parts by mass of the total content of the above-mentioned aluminum source, the above-mentioned calcium source and the above-mentioned silicon source.

Although a liquid medium is not particularly restricted as long as it can disperse or dissolve the aluminum source, the calcium source, the silicon source and the spinning aid, an aqueous medium is preferable. By using an aqueous medium as the liquid medium, as the spinning raw material liquid, a spinning raw material aqueous solution suitable for spinning by a sol-gel method can be prepared.

As the aqueous medium, water is preferable. In order to improve the stability of the solution or to conduct spinning more stably, the aqueous medium may be one obtained by adding to water as a main component other mediums that are soluble in water, such as an alcohol, a ketone, an amine, an amide, a carboxylic acid or the like. The aqueous medium may be one obtained by adding an organic salt such as ammonium chloride or the like to these media.

In the sol-gel method, at the time of preparing the spinning raw material liquid, by bringing the aluminum source, the calcium source and the silicon source into contact by mixing in the liquid medium, a chemical reaction such as condensation polymerization (sol-gel reaction) is caused to form a sol-like spinning raw material liquid; or by using a sol-like raw material (silica sol or the like) as the above-mentioned aluminum source, as the above-mentioned calcium source or the above-mentioned silicon source to form a sol-like spinning raw material liquid, and this raw material liquid is spun and dried to form gel-like inorganic precursor fibers (crude inorganic fibers).

As the method for spinning the spinning raw material liquid, various known methods can be mentioned. The following methods can be given. A dry continuous spinning method in which a spinning raw material liquid having a desired composition is discharged from a nozzle, and dried while winding and elongating by means of a winder; a rotational centrifugal hollow disc method in which a spinning raw material liquid having a desired composition is supplied to a disc having holes, and by rotating the disc, the raw material liquid is discharged from the holes of the disc by centrifugal force and the elongated raw material spinning liquid is dried; and an air blow method in which a spinning raw material liquid having a desired composition is dried while stretching by an air flow, whereby discontinuous fibers are obtained. In general, short fibers are desirable in order to attain cushion properties.

The viscosity of the spinning raw material liquid is preferably about 0.1 to 300 Pa · s, more preferably 0.5 to 250 Pa · s. A viscosity of 1 to 200 Pa · s is further preferable.

It is preferred that liquid fibers obtained by the above-mentioned spinning treatment be subjected to a drying treatment. Drying of liquid fibers is preferably conducted by supplying hot air of 50 to 450°C, preferably 60 to 450°C, to floating liquid fibers.

Subsequently, the resulting crude inorganic fibers are fired.

The firing temperature is preferably 800°C or higher and lower than the liquid phase formation temperature, more preferably 900°C or higher and lower than the liquid phase formation temperature, and further preferably 1000°C or higher and lower than the liquid phase formation temperature. The firing time is not particularly restricted as long as desired inorganic fibers are obtained, and may be appropriately set.

Firing can be conducted by using a known electric furnace such as a batch type furnace (e.g. a box type electric furnace) or a continuous furnace (e.g. a roller house furnace, a walking beam furnace). The atmosphere at the time of firing is preferably air or an oxidizing atmosphere in order to decompose organic substances used as a spinning aid or the like. If the performance of decomposing residual organic substances is not required to be taken into account, firing may be conducted in an atmosphere of an inert gas such as nitrogen.

The amount ratio (mass%) of each of components constituting the resulting inorganic fibers means a value obtained by pulverizing inorganic fibers that are fired at 1000°C or higher and measured by means of a fluorescent X-ray analysis apparatus (RIX2000 manufactured by Rigaku Corporation).

The resulting inorganic fibers may contain a balance component that appears as single oxygen (O). In such a case, a compensation calculation is conducted such that the total of the metal oxides excluding the balance component becomes 100 mol% (100 mass%).

It is preferred that the resulting inorganic fibers have an average fiber diameter of 1 $\mu$m to 15 $\mu$m, more preferably 2 $\mu$m to 10 $\mu$m, and further preferably 2 $\mu$m to 7 $\mu$m.

The average fiber diameter of the inorganic fibers used in the context of the present invention means an average value obtained by selecting arbitrary 100 to 400 fibers from a photograph (magnification: 500 to 2000) taken by a scanning electron microscope (JSM-5800LV manufactured by JEOL Ltd.), measuring the widths of these fibers, and calculating an average of these widths.

The formed body of the invention contains the above-mentioned inorganic fibers. In particular, the formed body may be in the shape of a sheet or a mat to be used as a cushion material or a holding material (hereinbelow, the cushion material or the holding material is often simply referred to as the "holding material"). The cushion material or the holding material may contain an organic binder, an inorganic binder or the like in addition to the inorganic fibers.

As the organic binder, a known binder can be used. A rubber, a water-soluble organic polymer compound, a thermoplastic resin, a thermosetting resin or the like can be used.

Specifically, as examples of the rubber, a copolymer of n-butyl acrylate and acrylonitrile, a copolymer of ethyl acrylate and acrylonitrile, a copolymer of butadiene and acrylonitrile, butadiene rubber or the like can be mentioned. As examples of the water-soluble organic polymer compound, carboxymethyl cellulose, polyvinyl alcohol or the like can be mentioned. As examples of the thermoplastic resin, a homopolymer or a copolymer of acrylic acid, an acrylic ester, acrylamide, acrylonitrile, methacrylic acid, methacrylic acid ester and the like, an acrylonitrile-styrene copolymer, an acrylonitrile-butadiene-styrene copolymer or the like can be mentioned. As the thermosetting resin, a bisphenol epoxy resin, a novolak type epoxy resin or the like can be mentioned. The amount of the organic binder is normally 0.1 to 10 parts by mass relative to 100 parts by mass of the inorganic fibers.

It is possible to add a small amount of organic fibers such as pulp as the organic binder. A thin and long organic fiber has a strong binding force. Cellulose or cellulose nanofiber or the like that have been highly fibrillated are preferable. Specifically, those having a diameter of 0.01 to 50 $\mu$m and a length of 1 to 5000 $\mu$m are preferable. No specific restrictions are imposed on the amount of the fibrillated fibers as long as it is an amount enough to bind the inorganic fibers. Normally, the amount of the organic fibers is 0.1 to 5 parts by mass (preferably 0.2 to 2.5 parts by mass) relative to 100 parts by mass of the inorganic fibers.

As the inorganic binder, known inorganic binders can be used. Examples thereof include glass frit, colloidal silica, alumina sol, sodium silicate, titania sol, lithium silicate, water glass or the like can be given. These inorganic binders may be used in combination of two or more. No specific restrictions are imposed on the amount of the inorganic binder as long as it is an amount enough to bind the inorganic fibers. Normally, the amount of the inorganic fibers is 0.1 to 10 parts by mass (preferably 0.2 to 8 parts by mass) relative to 100 parts by mass of the inorganic fibers.

The formed body such as a holding material of the invention contains inorganic fibers preferably in an amount of 90% or more, more preferably 95% or more, and further preferably 98% or more.

It is preferred that the formed body of the invention have a release surface pressure (i) of 1.2 N/cm$^2$ or more after 1000 cycles of test at a packing density of 0.3 g/cm$^3$ and a releasing ratio of 12.5%, or a release surface pressure (ii) of 2.0 N/cm$^2$ or more after 1000 cycles of test at a packing density of 0.3g/cm$^3$ and a releasing ratio of 8% (ii). More preferably, the formed body of the invention have both of the surface pressure (i) and the surface pressure (ii).

The release surface pressure (i) and the release surface pressure (ii) can be measured by the method described in the Examples.

The upper limit of the release surface pressure (i) is not particularly restricted, but normally 8.0 N/cm$^2$ or less. The upper limit of the surface pressure (ii) is not particularly restricted, but normally 12.0 N/cm$^2$ or less.

The holding material of the invention can be produced by a known method. For example, by a method in which inorganic fibers and optional other components are mixed, and the mixture is subjected to wet forming, or by a method in which inorganic fibers are collected and the collected fibers are processed, or the like, a sheet-like or mat-like holding material can be produced.

Specifically, several different methods can be mentioned. For example, a method in which, after subjecting inorganic fibers and a small amount of an organic binder to wet forming, a dry compressed mat is produced in the compressed state, a method in which a mat is produced from a blanket obtained by subjecting the collected inorganic fibers to a needle processing, or the like, can be mentioned.

The holding material of the invention may contain an expansive additive such as vermiculite.

In this case, the holding material may be produced by a method in which an aqueous slurry obtained by compounding inorganic fibers, a binder and vermiculite as an expansive additive at an arbitrary ratio is subjected to wet forming, followed by drying.

The holding material can be used in the state where it is disposed in a gap between the catalyst carrier and the casing that accommodates the catalyst carrier. In particular, it can be used to hold the catalyst carrier in a catalytic converter for exhaust gas purification that is mounted in vehicles, buildings, industrial furnaces or the like.

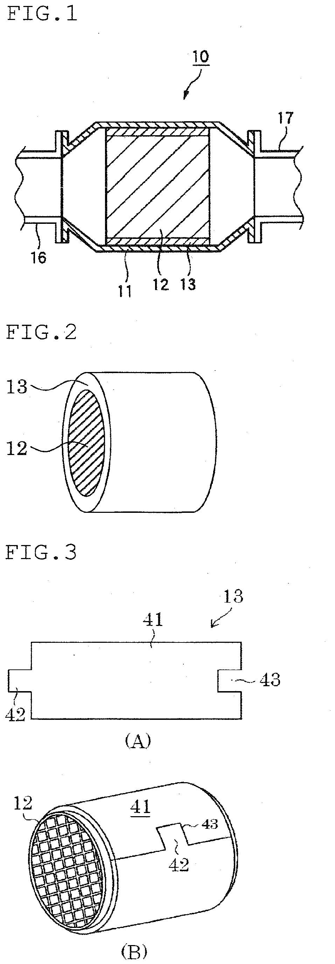

FIG. 1 shows a schematic cross-sectional view of one example of a catalytic converter for exhaust gas purification. A catalytic converter 10 is composed of a casing 11, a catalyst carrier 12 and a holding material 13. The catalyst carrier 12 is installed in the inside of the casing 11 with the holding material 13 being disposed between the casing and the carrier. On one end part of the casing 11, an introduction pipe 16 for introducing an exhaust gas discharged from an internal combustion engine or the like is connected, and on the other end, a discharging pipe 17 for discharging the exhaust gas that has passed the catalyst carrier 12 outside is provided.

FIG. 2 shows a perspective view showing the state in which the catalyst carrier 12 is held by the holding material 13.

The holding material 13 serves not only to hold the catalyst carrier safely such that the catalyst carrier 12 is not broken by collision against the casing 11, but also to suppress leakage of unpurified exhaust gas from a gap between the catalyst carrier and the casing.

Although the shape of the holding material of the invention is not particularly restricted, the holding material may be a sheet-like or mat-like formed product obtained by forming the inorganic fibers into a sheet-like or mat-like shape.

One example (plan view) of the shape of the holding material is shown in FIG. 3(A). In a flat plate-like main body part 41, a convex part 42 is formed on one end thereof. On the other end thereof, a concave part 43 that can be engaged with the convex part 42 is formed. As for the shapes of the convex part 42 and the concave part 43, in addition to a rectangular shape shown in the figure, a triangle or a semicircle can be given. The number of the convex part 42 and the concave part 43 is not limited to one, and two or more of the convex part 42 and the concave part 43 may be provided.

As shown in FIG. 3(B), by winding the main body 41 around the outer surface of the catalyst carrier 12 and by engaging the convex part 42 with the concave part 43, the main body 41 is wrapped around the catalyst carrier 12.

Although the thickness of the holding material is not particularly restricted, it is 6 to 12 mm, for example.

EXAMPLES

Example 1 and Comparative Examples 0 to 9

Basic aluminum chloride (Takibine manufactured by Taki Chemical Co., Ltd.) as an aluminum source, calcium nitrate (manufactured by Wako Pure Chemical Industries, Ltd.) as a calcium source, an anionic colloidal silica (Snowtex O manufactured by Nissan Chemical Industries) as a silicon source and a partially saponified polyvinyl alcohol (PVA217 manufactured by Kuraray Co., Ltd.) as a spinning aid, and water as a liquid medium were used in such amounts that the resulting inorganic fibers have compositions shown in Tables 1 and 2, whereby a spinning raw material solution was prepared.

10 parts by mass (in terms of solid matter) of a spinning aid was added relative to 100 parts by mass of the total content of the basic aluminum chloride, the calcium nitrate and the anionic colloidal silica.

Spinning was conducted by a blowing method in which a spinning raw material solution is supplied to a high-speed spinning stream. As a result, crude inorganic fibers having a length of several tens to several hundreds mm were obtained. The spinning was conducted by a method in which the spinning raw material solution was discharged from a spinning nozzle having a diameter of 0.5 mm such that the supply amount of the spinning raw material solution became 6 ml/h per nozzle, and at a gas flow rate of 30 to 35 m/s so that the stream of the spinning raw material solution became parallel with the air from an air nozzle. Thereafter, the spinning raw material solution was subjected to a drying treatment by passing a drying zone, and collected by means of a mesh, whereby crude inorganic fibers were obtained.

Subsequently, the above-mentioned crude inorganic fibers were fired at 1100°C for 10 minutes to obtain inorganic fibers. The following evaluations were conducted for the resulting inorganic fibers. The results are shown in Tables 1 and 2.

[Tactile sensation/compression and recovery property]

When the inorganic fibers were compressed by 30% from the original height, those recovered to the original position were evaluated as ○, and those recovered but suffered from dusting due to fiber breakage were evaluated as Δ. Further, those could not recover to the original position were evaluated as x.

[Crystal structure]

The crystal structure was measured with an X-ray diffraction apparatus (RINT-ULTIMA III, manufactured by Rigaku Corporation) by using a multi-purpose high temperature attachment in the state where the sample was heated and held at a temperature of 1100°C.

[Heat resistance]

Heat resistance was measured by means of TMA 320 manufactured by Seiko Electronics Instruments. Specifically, 20 mg to 30 mg of the resulting inorganic fibers were put in an empty platinum pan, and the resultant was heated to 1200°C in the state where a prescribed load was applied. Heat resistance was calculated from two inflection points before and after the coefficient of thermal expansion was suddenly lowered.

[Compression surface pressure and release surface pressure (fiber strength)

The surface pressure was measured by a universal tester. Specifically, 0.094g of inorganic fibers was packed in a container having a diameter of 10.2 mm that was left at rest on a compression board. In that state, the fibers were gradually compressed from above by means of a compression rod. A load (compression force) at which the packing density of the inorganic fibers reached 0.30 g/cm$^3$ was obtained as a compression surface pressure. In that state, the load (compression force) applied by the compression rod was gradually decreased, and when a gap (distance) between the compression board and the compression rod was taken as X (mm), a load (compression force) at which the gap between the compression board and the compression rod became X + 0.125X (mm) (i.e. the releasing ratio of a gap between the compression board and the compression rod became 12.5% (packing density: 0.267 g/cm$^3$)) was obtained as a release surface pressure.

[Surface pressure residual ratio]

The surface pressure residual ratio was calculated by the following formula from the compression surface pressure and the release surface pressure obtained as above.

$$\text{Surface pressure residual rate (\%)} = \{(\text{Surface pressure (Pa) at Distance X} + 0.125X)/(\text{Surface pressure (Pa) at Distance X}) \times 100$$

[Dissolution test]

Fibers were placed on a membrane filter. By means of a micro pump, physiological saline having a pH of 4.5 and a pH of 7.4 was added dropwise to the fibers. A filtrate that had passed through the fibers and the filter was stored in a container. The stored filtrate was taken out after the lapse of 24 hours, and eluted components were quantified by means of an ICP emission spectroscopy apparatus, and the solubility and the dissolution rate constant were calculated. The elements for the measurement were three elements, i.e. Al, Si and Ca. The fiber diameter was measured and the measured fiber diameter was converted into the dissolution rate constant (unit: ng/cm$^2 \cdot$ h) that is the elution amount per unit surface area and per unit time.

Example 3 and Comparative Example 10

Holding materials were produced by using the inorganic fibers in Example 1 and Comparative Example 6. An aqueous slurry that contained 0.8 parts by mass of fibrillated pulp as the organic binder and 4000 parts by mass of water relative to 100 parts by mass of the inorganic fibers was prepared, and the slurry was subjected to dehydration forming, whereby a wet mat was obtained. By drying the wet mat at 170°C while compressing, a mat (holding material) (density: 0.12 g/cm$^3$) was obtained. The obtained mat was heated at 700°C for de-binding. The heat resistance and the solubility of each of these mats corresponded to those of the inorganic fibers.

Subsequently, the obtained mats were compressed by the above-mentioned method at a packing density of 0.3 g/cm$^3$. Thereafter, releasing was conducted until the releasing ratio became 8% (packing density: 0.278 g/cm$^3$) or 12.5% (packing density: 0.267 g/cm$^3$). This compression and release operation were conducted 2500 cycles, and a release surface pressure after 2500 cycles was measured. The results are shown in Tables 3 and 4.

In particular, an automobile is used in the state where cooling and expansion are repeated. The surface pressure value at a releasing ratio of 12.5% in the repeated compression test is important.

Table 1

| | | Example | Comparative Examples | | | | |
|---|---|---|---|---|---|---|---|
| | | 1 | 0 | 1 | 2 | 3 | 4 |
| Composition ratio (mass%) | $Al_2O_3$ | 61.4 | 66.0 | 60.1 | 79.4 | 60.1 | 70.4 |
| | $SiO_2$ | 12.9 | 10.3 | 28.0 | 9.5 | 18.5 | 16.4 |
| | CaO | 25.7 | 23.7 | 11.1 | 11.1 | 21.5 | 13.2 |
| Composition ratio (mol%) | $Al_2O_3$ | 47.2 | 52.8 | 46.7 | 68.7 | 46.2 | 57.4 |
| | $SiO_2$ | 16.8 | 15.0 | 38.9 | 15.0 | 25.8 | 24.3 |
| | CaO | 36.0 | 32.2 | 14.4 | 16.3 | 28.0 | 18.3 |
| Tactile sensation/State at the time of compression | | ○ | ○ | ○ | ○ | ○ | ○ |
| Crystal structure | | yoshiokaite Gehlenite | Gehlenite yoshiokaite | $\gamma$ - $Al_2O_3$ Anorthite Mullite | $\gamma$ - $Al_2O_3$ | yoshiokaite | Anorthite |
| Heat resistance (°C) | Applied load 4 $N/cm^2$ | 890 | 891 | 875 | 793 | 836 | 828 |
| | Applied load 10 $N/cm^2$ | 857 | 864 | 869 | 782 | 813 | 806 |
| Fiber strength ($N/cm^2$) | Packing density 0.3 g/cm (Compression surface pressure) | 14.9 | 13.9 | 14.0 | 13.6 | 18.5 | 12.8 |
| | Packing density 0.267 $g/cm^3$ (Release surface pressure) | 2.3 | 2.2 | 2.3 | 2.3 | 2.7 | 1.9 |
| | Surface pressure residual ratio (%) | 15.5-15.8 | 14.0-16.7 | 13.8-18.2 | 16.5-17.9 | 14.1-14.8 | 14.8-15.1 |
| Dissolution test | pH4.5 dissolution rate constant ($ng/h \cdot cm^2$) | 2805 | 1721 | 0 | | 2534 | 144 |
| | pH7.4 dissolution rate constant ($ng/h \cdot cm^2$) | 151 | | | | | |

Table 2

| | | Comparative Examples | | | | |
|---|---|---|---|---|---|---|
| | | 5 | 6 | 7 | 8 | 9 |
| Composition ratio (mass%) | $Al_2O_3$ | 51.7 | 68.5 | 58.3 | 49.2 | 49.4 |
| | $SiO_2$ | 31.6 | 7.8 | 6.8 | 11.9 | 9.6 |
| | CaO | 16.7 | 23.6 | 34.9 | 38.9 | 41.0 |
| Composition ratio (mol%) | $Al_2O_3$ | 37.6 | 55.8 | 44.9 | 35.9 | 36.2 |
| | $SiO_2$ | 41.8 | 11.6 | 9.5 | 15.8 | 12.9 |
| | CaO | 20.6 | 32.6 | 45.6 | 48.3 | 50.9 |
| Tactile sensation/State at the time of compression | | × | Δ | × | Δ | × |
| Crystal structure | | Metastable Anorthite | Grossite (CA2) Gehlenite | Grossite(CA2) Gehlenite Krotite(CA) | Krotite(CA) Gehlenite Grossite(CA2) | Gehlenite Mayenite |
| Heat resistance (°C) | Applied load 4 N/cm$^2$ | | 916 | | 1020 | |
| | Applied load 10 N/cm$^2$ | | 890 | | 985 | |
| Fiber strength (N/cm$^2$) | Packing density 0.3 g/cm (Compression surface pressure) | | 13.25 | | 9.7 | |
| | Packing density 0.267 g/cm (Release surface pressure) | | 1.8 | | 0.7 | |
| | Surface pressure residual ratio (%) | | 11.6-15.5 | | 5.9-7.8 | |
| Dissolution test | pH4.5 dissolution rate constant (ng/h·cm$^2$) | | 3323 | | 11616 | |
| | pH7.4 dissolution rate constant (ng/h·cm$^2$) | | | | | |

Table 3

| | | | | Examples 1 and 3 | Comp. Ex. 6 and 10 |
|---|---|---|---|---|---|
| Inorganic fibers | 1 cycle | | Compression surface pressure (N/cm$^2$) | 16.2 | 13.2 |
| | | | 8% release surface pressure (N/cm$^2$) | 3.9 | 3.0 |
| | | | Residual ratio (%) | 24.3 | 22.4 |
| | 1 cycle | | Compression surface pressure (N/cm$^2$) | 12.6 | 10.1 |
| | | | 8% release surface pressure (N/cm$^2$) | 5.8 | 5.3 |
| | | | Residual ratio (%) | 45.9 | 53.0 |

(continued)

|  |  |  | Examples 1 and 3 | Comp. Ex. 6 and 10 |
|---|---|---|---|---|
| Formed body | 100 cycles | Compression surface pressure (N/cm$^2$) | 8.5 | 5.4 |
|  |  | 8% release surface pressure (N/cm$^2$) | 3.5 | 1.8 |
|  |  | Residual ratio (%) | 41.7 | 33.5 |
|  | 500 cycles | Compression surface pressure (N/cm$^2$) | 7.4 | 4.3 |
|  |  | 8% release surface pressure (N/cm$^2$) | 2.9 | 1.3 |
|  |  | Residual ratio (%) | 39.8 | 31.4 |
|  | 1000 cycles | Compression surface pressure (N/cm$^2$) | 7.0 | 3.8 |
|  |  | 8% release surface pressure (N/cm$^2$) | 2.7 | 1.2 |
|  |  | Residual ratio (%) | 39.1 | 30.5 |
|  | 2500 cycles | Compression surface pressure (N/cm$^2$) | 6.6 | 3.3 |
|  |  | 8% release surface pressure (N/cm$^2$) | 2.5 | 1.0 |
|  |  | Residual ratio (%) | 38.8 | 30.4 |

Table 4

|  |  |  | Examples 1 and 3 | Comp. Ex. 6 and 10 |
|---|---|---|---|---|
| Inorganic fibers | 1 cycle | Compression surface pressure (N/cm$^2$) | 16.2 | 13.2 |
|  |  | 12.5% release surface pressure (N/cm$^2$) | 2.3 | 1.8 |
|  |  | Residual ratio (%) | 14.3 | 13.5 |
| Formed body | 1 cycle | Compression surface pressure (N/cm$^2$) | 15.3 | 7.8 |
|  |  | 12.5% release surface pressure (N/cm$^2$) | 5.2 | 2.3 |
|  |  | Residual ratio (%) | 34.0 | 29.1 |
|  | 100 cycles | Compression surface pressure (N/cm$^2$) | 9.1 | 4.2 |
|  |  | 12.5% release surface pressure (N/cm$^2$) | 2.7 | 1.1 |
|  |  | Residual ratio (%) | 29.2 | 25.9 |
|  | 500 cycles | Compression surface pressure (N/cm$^2$) | 7.3 | 3.3 |
|  |  | 12.5% release surface pressure (N/cm$^2$) | 2.0 | 0.8 |
|  |  | Residual ratio (%) | 27.0 | 24.0 |
|  | 1000 cycles | Compression surface pressure (N/cm$^2$) | 6.6 | 3.0 |
|  |  | 12.5% release surface pressure (N/cm$^2$) | 1.7 | 0.7 |
|  |  | Residual ratio (%) | 25.9 | 22.5 |
|  | 2500 cycles | Compression surface pressure (N/cm$^2$) | 5.8 | 2.5 |
|  |  | 12.5% release surface pressure (N/cm$^2$) | 1.4 | 0.5 |
|  |  | Residual ratio (%) | 24.0 | 20.1 |

Industrial Applicability

The inorganic fibers of the invention can be used as a heat-insulating material or the like. Further, the formed body of the invention can be used as a holding material or the like used in a catalytic converter for exhaust gas purification that is mounted in automobiles, buildings, industrial furnaces or the like.

Although only some exemplary embodiments and/or examples of this invention have been described in detail above, those skilled in the art will readily appreciate that many modifications are possible in the exemplary embodiments and/or examples without materially departing from the novel teachings and advantages of this invention. Accordingly, all such modifications are intended to be included within the scope of this invention.

The Japanese application specification claiming priority under the Paris Convention is incorporated herein by reference in its entirety.

## Claims

1.    Inorganic fibers having the following composition:

| | |
|---|---|
| $Al_2O_3$ | 43.2 to 51.2 mol% |
| $SiO_2$ | 12.8 to 20.8 mol% |
| CaO | 32.0 to 40.0 mol% |

the total of the components mentioned above is 98 mol% or more.

2.    The inorganic fibers according to claim 1 having the following composition:

| | |
|---|---|
| $Al_2O_3$ | 44.2 to 50.2 mol% |
| $SiO_2$ | 13.8 to 19.8 mol% |
| CaO | 33.0 to 39.0 mol% |

3.    The inorganic fibers according to claim 1 or 2 that have a Yoshiokaite structure.

4.    A formed body comprising the inorganic fibers according to any one of claims 1 to 3.

5.    The formed body according to claim 4 that is a cushion material or a holding material.

6.    The formed body according to claim 5 that is a holding material interposed in a gap between a catalyst carrier and a casing that accommodates the catalyst carrier.

7.    The formed body according to any one of claims 4 to 6 that has a release surface pressure (i) of 1.2 N/cm$^2$ or more after 1000 cycles of test at a packing density of 0.3 g/cm$^3$ and a releasing ratio of 12.5%, or a release surface pressure (ii) of 2.0 N/cm$^2$ or more after 1000 cycles of test at a packing density of 0.3 g/cm$^3$ and a releasing ratio of 8%.

8.    The formed body according to claim 7 that has both the release surface pressure (i) and the release surface pressure (ii).

## Patentansprüche

1.    Anorganische Fasern, welche die folgende Zusammensetzung haben:

| | |
|---|---|
| $Al_2O_3$ | 43.2 bis 51.2 Mol% |
| $SiO_2$ | 12.8 bis 20.8 Mol% |
| CaO | 32.0 bis 40.0 Mol% |

das Total der oben genannten Komponenten ist 98 Mol% oder mehr.

2.    Die anorganischen Fasern gemäss Anspruch 1, welche die folgende Zusammensetzung haben:

| Al$_2$O$_3$ | 44.2 bis 50.2 Mol% |
|---|---|
| SiO$_2$ | 13.8 bis 19.8 Mol% |
| CaO | 33.0 bis 39.0 Mol% |

3. Die anorganischen Fasern gemäss Anspruch 1 oder 2, welche eine Yoshiokait-Struktur haben.

4. Ein geformter Körper umfassend die anorganischen Fasern gemäss einem der Ansprüche 1 bis 3.

5. Der geformte Körper gemäss Anspruch 4, der ein Polstermaterial oder ein Haltematerial ist.

6. Der geformte Körper gemäss Anspruch 5, der ein Haltematerial ist, das in einer Lücke zwischen einem Katalysatorträger und einem Gehäuse, das den Katalysatorträger aufnimmt, zwischengeordnet ist.

7. Der geformte Körper gemäss einem der Ansprüche 4 bis 6, der nach 1000 Testzyklen bei einer Packungsdichte von 0.3 g/cm$^3$ und einem Freigabeverhältnis von 12.5% einen Freigabeflächendruck (i) von 1.2 N/cm$^2$ oder mehr hat, oder nach 1000 Testzyklen bei einer Packungsdichte von 0.3 g/cm$^3$ und ein Freigabeverhältnis von 8% einen Freigabeflächendruck (ii) von 2.0 N/cm$^2$ oder mehr hat.

8. Der geformte Körper gemäss Anspruch 7, der beide, den Freigabeflächendruck (i) und den Freigabeflächendruck (ii) hat.

**Revendications**

1. Fibres inorganiques ayant la composition suivante :

| Al$_2$O$_3$ | 43.2 à 51.2 mol% |
|---|---|
| SiO$_2$ | 12.8 à 20.8 mol% |
| CaO | 32.0 à 40.0 mol% |

le total des composantes mentionnées ci-dessus étant de 98 mol% ou plus.

2. Les fibres inorganiques selon la revendication 1, ayant la composition suivante :

| Al$_2$O$_3$ | 44.2 à 50.2 mol% |
|---|---|
| SiO$_2$ | 13.8 à 19.8 mol% |
| CaO | 33.0 à 39.0 mol% |

3. Les fibres inorganiques selon la revendication 1 ou 2, ayant une structure de Yoshiokaïte.

4. Un corps formé comprenant les fibres inorganiques selon l'une quelconque des revendications 1 à 3.

5. Le corps formé selon la revendication 4, étant un matériau amortisseur ou un matériau de retenue.

6. Le corps formé selon la revendication 5, étant un matériau de retenue interposé dans un écart entre un support pour catalyseur et un boîtier accueillant le support de catalyseur.

7. Le corps formé selon l'une quelconque des revendications 4 à 6, ayant une pression de surface de libération (i) de 1.2 N/cm$^2$ ou plus après 1000 cycles d'essai à une densité de conditionnement de 0.3 g/cm$^3$ et un rapport de libération de 12.5%, ou une pression de surface de libération (ii) de 2.0 N/cm$^2$ ou plus après 1000 cycles d'essai à une densité de conditionnement de 0.3 g/cm$^3$ et un rapport de libération de 8%.

8. Le corps formé selon la revendication 7, ayant la pression de surface de libération (i) ainsi que la pression de surface

de libération (ii).

FIG.1

FIG.2

FIG.3

(A)

(B)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009041499 A
- WO 2007054697 A

- US 20090060802 A1